Europäisches Patentamt

European Patent Office

Office européen des brevets

(19)

(11) Numéro de publication: **0 041 906
B1**

(12) **FASCICULE DE BREVET EUROPEEN**

(45) Date de publication du fascicule du brevet:
**21.11.84**

(51) Int. Cl.³: **F 16 J  15/12**, F 16 J  15/10

(21) Numéro de dépôt: **81420081.2**

(22) Date de dépôt: **01.06.81**

(54) **Joint de culasse pour moteur à combustion interne.**

(30) Priorité: **02.06.80 FR 8012478**

(43) Date de publication de la demande:
**16.12.81 Bulletin 81/50**

(45) Mention de la délivrance du brevet:
**21.11.84 Bulletin 84/47**

(84) Etats contractants désignés:
**AT BE CH DE GB IT LI LU NL SE**

(56) Documents cités:
**FR - A - 2 139 456
FR - A - 2 422 880
GB - A - 2 034 419**

(73) Titulaire: **CURTY, 25, rue Aristide Briand, Saint-Priest, Rhône (FR)**

(72) Inventeur: **Lucas, Jacques Denis Henry, 7, Boulevard de l'Europe, F-69600 Oullins (FR)**
Inventeur: **Samson, Dominique Hugues Pierre M., 3, rue Salvador Allende, F-69600 Oullins (FR)**

(74) Mandataire: **Maureau, Philippe, Cabinet Germain & Maureau Le Britannia - Tour C 20, bld Eugène Déruelle, F-69003 Lyon (FR)**

## Description

La présente invention a pour objet un joint de culasse pour moteur à combustion interne.

Un joint de culasse est situé entre le bloc moteur et la culasse, et doit remplir plusieurs fonctions et notamment:

— assurer l'étanchéité au liquide de refroidissement et au liquide de lubrification, qui circulent entre le bloc moteur et la culasse,
— assurer l'étanchéité au gaz de combustion à des pressions et des températures élevées,
— régler l'épaisseur disponible entre culasse et bloc moteur, en faisant office de butée de serrage,
— compenser les irrégularités géométriques des plans de joint de la culasse et du bloc moteur de façon à maintenir le contact et conserver l'étanchéité initiale malgré les déformations du moteur survenant au cours du fonctionnement de celui-ci.

Ces diverses fonctions sont habituellement remplies par un matériau compressible qui, en s'écrasant, réalise l'adaptabilité et l'étanchéité et supporte l'effort de serrage en maintenant une épaisseur définie entre le bloc moteur et la culasse.

Pour compenser l'écrasement du joint de culasse, il est le plus souvent nécessaire de procéder à un ou plusieurs resserrages du joint après que le moteur ait subi un certain nombre de cycles thermiques lors des premières périodes de fonctionnement.

Les joint traditionnels sont généralement à base d'amiante. Ce matériau présente néanmoins, l'inconvénient d'être complexe et onéreux dans sa mise en œuvre et insalubre pour les personnes amenées à le manipuler, ce qui impose de nombreuses précautions pour la fabrication des joints.

Il existe également des joints de culasse constitués par une tôle métallique comportant des orifices au niveau des passages de fluide et des cordons souples sur le pourtour de ces orifices pour assurer l'étanchéité.

Les orifices au niveau des cylindres sont étanchés par des anneaux métalliques procurant l'étanchéité au gaz de combustion.

En ce qui concerne la fonction de butée de serrage, elle est remplie par des éléments métalliques rapportés.

L'intérêt d'un tel joint par rapport à ceux constitués d'un matériau compressible tel que de l'amiante est principalement de dissocier les fonctions d'étanchéité et de butée de serrage, ce qui permet de supprimer le resserrage après les premières périodes de fonctionnement.

Cette technique présente, néanmoins, l'inconvénient d'être très onéreuse dans sa mise en œuvre du fait que la plaque métallique formant l'âme du joint est obtenue par découpe à partir d'un flan, ce qui conduit à des pertes très élevées.

Un autre type de joint de culasse, décrit dans le brevet français 2 422 880, est constitué par une plaque de matière synthétique souple ou de caoutchouc pouvant comporter des renforcements incorporés.

Suivant la description qui est faite de ce joint, sa souplesse est suffisante pour lui permettre de s'adapter aux surfaces à jointoyer. Néanmoins, la contrepartie de cette souplesse nécessaire à l'obtention de l'étanchéité, consiste dans un fluage à chaud important. Un tel joint ne peut donc pas à la fois remplir les fonctions de butée de serrage et d'étanchéité. En effet, loin de remédier à l'un des principaux inconvénients des joints traditionnels, à savoir le tassement, celui-ci est aggravé à chaud.

Il est donc nécessaire de prévoir des renforcements en une matière ne fluant pas à chaud, telle que métal ou fibres, par exemple sous forme de plaques intermédiaires ou de renforts localisés. Cette façon de procéder nécessite la réalisation préalable d'ébauches, par exemple une plaque métallique ou fibreuse au contour du joint, obtenue par défonçage, opération au cours de laquelle on perd 60 à 80% de matière, ce qui enlève tout intérêt économique au procédé.

Dans le cas de renforts annulaires et profilés, on est également obligé de préparer des ébauches que l'on dispose successivement dans le moule avent l'opération de formage.

Ce joint est donc d'une réalisation complexe et coûteuse, présentant en outre une rigidité globale faible pouvant occasionner des difficultés de montage, ajoutées à celle qu'il y a d'obtenir une précision suffisante par moulage en polymère souple de pièces de grandes dimensions, telles que des joints de culasses, pour le positionnement de certains orifices tels que ceux de passage d'huile sous pression.

En effet, les polymères souples du type considéré ont un fort retrait au moulage et possèdent un coefficient de dilatation thermique très élevé.

Le brevet français 2 139 456 décrit un joint d'étanchéité dans lequel un élastomère de silicone est formé sur un renforcement rigide contenant au moins une polysulfone aromatique. Ce joint d'étanchéité est destiné à former un joint pour arbre tournant dans lequel la partie rigide, ici réalisée en matière synthétique, est habituellement en métal. Il faut noter que cette partie rigide sert à la seule mise en plase et au maintien du joint, sans subir aucun effort mécanique, comme tel est le cas dans un joint de culasse.

La présente invention vise à remédier aux inconvénients des joints de culasse existants.

A cet effet, dans le joint de culasse qu'elle concerne du type comprenant une plaque réalisée en un matériau rigide dans laquelle sont ménagés des orifices pour les passages d'huile de lubrification, de liquide de refroidissement de la culasse, des goujons de serrage sur le bloc moteur, et pour les chambres de combustion, chaque orifice pour le passage d'un liquide étant équipé d'un cordon d'étanchéité souple et chaque orifice de passage de gaz étant équipé d'un anneau métallique, la plaque est réalisée en une matière organique rigide ne fluant pas à chaud, formant à la fois l'âme du joint etles butées de serrage de celui-ci.

Les fonctions d'étanchéité aux liquides et aux gaz sont réalisées, de façon connue, par les anneaux d'étanchéité souples et par les anneaux métalliques.

Pour sa part, la plaque constituant l'âme du joint assure en elle-même les fonctions de compensation des irrégularités géométriques des plans du bloc moteur et de la culasse, et de butée de serrage.

Avantageusement, la plaque constituant l'âme du joint de culasse est obtenue par une technique de moulage par injection.

Ce joint de culasse est donc de conception simple, comporte un nombre réduit d'éléments, et est produit de façon économique avec un minimum de perte de matière, et remplit de façon durable les principales fonctions requises.

Ce joint présente en outre l'intétêt d'être constitué essentiellement d'une plaque rigide présentant une grande facilité de montage, et d'une précision de moulage suffisante pour le positionnement de petits orifices, en raison d'un faible retrait au moulage et d'un coefficient de dilatation thermique sensiblement plus faible que celui des polymères souples.

Avantageusement, la plaque constituant la partie essentielle du joint est réalisée en une résine thermostable rigide de type thermodurcissable, ou en une résine thermostable rigide, de type thermoplastique à faible taux de fluage, telle que du polysulfure de phénylène.

En outre, cette résine peut être chargée de fibres telles que des fibres de verre ou d'autres fibres, telles que de carbone, d'amiante, de roche, etc. . .

Enfin, la résine peut être chargée avec toute charge diluante ou renforçante compatible avec le polymère, tel que craie, noir de carbone etc. . .

La plaque constitutive de l'âme du joint peut se présenter sous plusieurs formes et notamment être pleine et d'épaisseur constante entre les orifices, posséder une épaisseur variable, à savoir plus importante autour des orifices â étancher et des passages de vis que dans les zones de liaison, ou encore être constituée par un réseau de segments reliant entre elles les zones épaisses situées autour des orifices à étancher.

C'est ainsi par exemple que, dans la mesure où la plaque n'a pas une épaisseur constante, son épaisseur peut être inférieure à 1 mm dans les zones de liaison et de l'ordre de 2 mm dans les zones entourant les orifices.

Selon une caractéristique de l'invention, la plaque constituant l'âme du joint présente, dans l'une de ses faces, au moins une rainure s'étendant radialement depuis chaque orifice depassage des gaz jusqu'au bord de la plaque.

Ces rainures servent à canaliser vers l'extérieur les éventuelles fuites de gaz.

Au niveau des orifices de passage des liquides, les cordons d'étanchéité sont réalisés en élastomère à haute tenue thermique, tel que silicones, fluorocarbone, etc. . .

Le montage de ces cordons peut être réalisé de plusieurs façons, et notamment par moulage sur la tranche d'un orifice avec encastrement ou non, par dépôt dans une rainure annulaire entourant l'orifice considéré, ce dépôt étant réalisé par sérigraphie ou moulage par compression, par transfert ou par injection.

Dans ce dernier cas, il est avantageusement prévu une rainure dans chaque face du joint pour chaque orifice de passage de liquide.

Pour les orifices de passages de gaz, il peut être prévu un anneau métallique nervuré fixé sur la tranche de chaque orifice où il est encastré ou non, ou un jonc torique élastique emprisonné dans une sertissure métallique ou encore une sertissure métallique associée à la plaque avec ménagement de rainures annulaires dans celle-ci au niveau de la zone de sertissage.

Pour les orifices de passage des vis de serrage, il est prévu une surépaisseur simple de polymère ou une rainure annulaire avec moulure d'élastomère.

Selon un mode de réalisation de ce joint de culasse, celui-ci est constitué d'une plaque moulée par injection en une résine thermoplastique rigide de type polysulfure de phénylène, chargée de fibres de verre, comportant des trous correspondant aux orifices des passages de fluides entre bloc moteur et culasse, et comportant aussi une rainure sur le pourtour de passages de liquides et des orifices de passages de vis de fixation de la culasse zur le bloc, rainures dans chacune lesquelles est moulé un cordon en élastomère de type silicone par exemple, un système d'étanchéité au gaz étant prévu constitué au niveau des orifices de passages des gaz par des anneaux métalliques nervurés fixés sur la tranche des dits orifices présentant une bonne élasticité après écrasement.

De toute façon, l'invention sera bien comprise à l'aide de la description qui suit en référence au dessin schématique annexé représentant, à titre d'exemples non limitatifs, plusieurs formes d'exécution de ce joint:

Figure 1 est une vue en coupe transversale d'une partie d'un premier joint;

Figures 2 à 4 sont trois vues en coupe de trois modes de réalisation de l'étanchéité au niveau d'un orifice de passage de liquide;

Figures 5 à 9 sont cinq vues en coupe de différents mode de réalisation de l'étanchéité au niveau d'un orifice de passage de gaz;

Figure 10 est une vue en plan d'une partie d'un joint de culasse;

Figure 11 est une vue en coupe selon la ligne 11—11 du joint de figure 10.

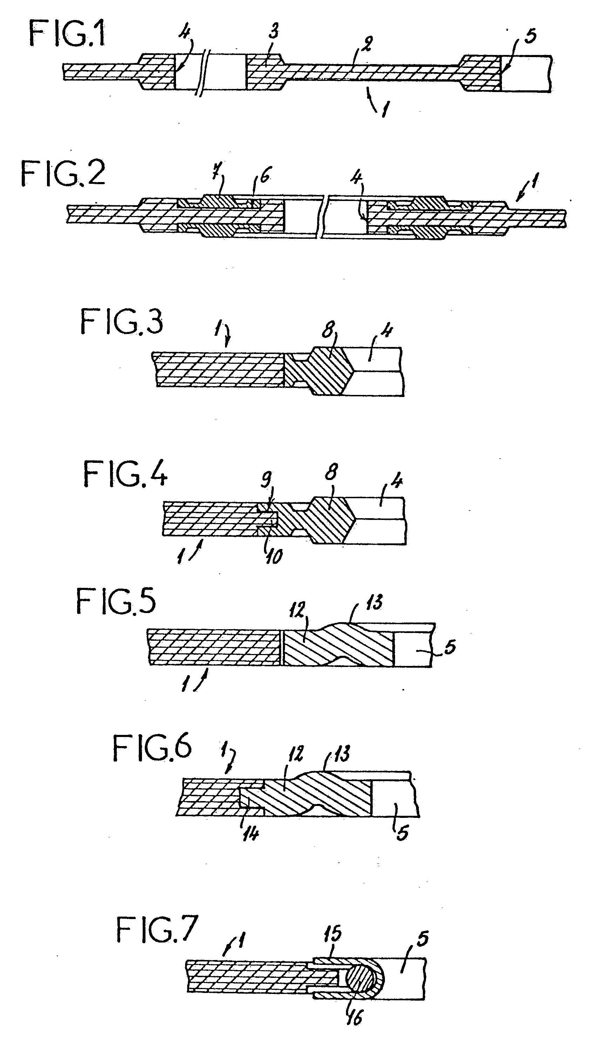

Le joint de culasse représenté à la figure 1 est réalisé à partir d'une plaque 1 en polymère rigide, tel que du polysulfure de phénylène chargé de fibres de verre. Cette plaque comporte des zones 2 de faible épaisseur, inférieure à 1,5 mm, et des zones 3 de forte épaisseur, de 1 à 3 mm, autour des orifices de passages de liquides 4 et des orifices de passages de gaz 5. Cet agencement est rendu possible du fait que les zones de faible épaisseur ne participent nullement à l'étanchéité.

Dans la forme d'exécution représentée à la figure 2, la plaque 1 présente, au niveau de chaque orifice 4 de passage de liquide, et sur chacune de ses faces, une rainure annulaire 6 dans laquelle est logé un cordon élastomère 7 déposé de manière connue.

Dans la forme d'exécution représentée à la figure 3, au niveau de chaque orifice 4 de passage de liquide, l'étanchéité est réalisée par un cordon 8 moulé sur la tranche, avec interposition d'une matière primaire d'adhésion.

Dans la forme d'exécution représentée à la figure 4, la plaque 1 présente, au niveau de chaque orifice 4 de passage de liquide et sur sa tranche, deux parties découpées 9 assurant le ménagement d'un talon central 10, venant de moulage, talon 10 sur lequel est engagé le cordon d'étanchéité 8.

Les figures 5 à 9 représentent différents modes de réalisation de l'étanchéité au niveau des orifices 5 de passage des gaz.

A la figure 5, l'étanchéité est réalisée par un anneau métallique 12 présentant une nervure 13, et fixé sur la tranche de l'orifice 5.

L'agencement représenté à la figure 6, est identique à celui de la figure 5, à la différence près que l'anneau 12 présente, sur sa face tournée vers la tranche de l'orifice 5, un talon 14 destiné à être emprisonné dans la plaque 1 lors du moulage.

Dans la forme d'exécution représentée à la figure 7, les orifices 5 de passage des gaz sont bordés par une sertissure métallique 15 contenant un jonc torique élastique 16 en métal ou en une autre matière élastique.

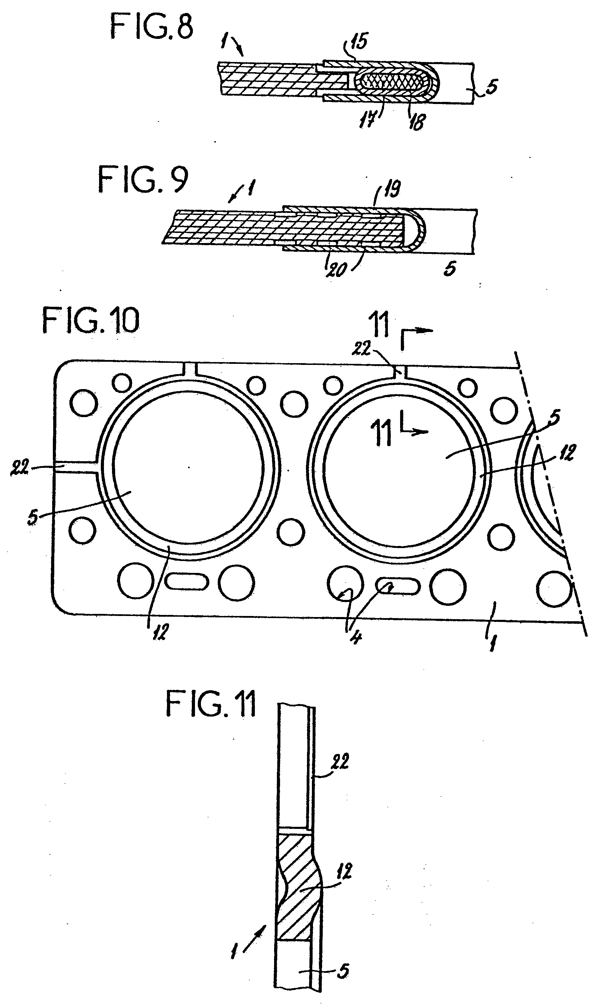

A la figure 8, la sertissure métallique 15 renferme un jonc constitué par un anneau 17 en un matériau compressible fibreux gainé par une sertissure métallique 18.

Dans la forme d'exécution représentée à la figure 9, l'étanchéité au niveau d'un orifice 5 est réalisée par sertissage d'une bordure métallique 19, directement sur la plaque 1 qui présente, sur chacune de ses faces dans la zone entourant l'orifice 5, des rainures annulaires 20 diminuant la surface de portée et augmentant la pression de serrage de la bordure 19 sur la plaque.

Les figures 10 et 11 représentent une plaque 1 dont les orifices de passage de liquides 4 sont équipés d'un joint conforme à l'une des figures 2 à 4, et dans laquelle les orifices 5 de passage des gaz sont étanchés par des anneauc analogues à celui représenté à la figure 5, mais qui pourraient également être susceptibles d'autres formes d'exécution. Cette plaque présente l'originalité de comporter, dans l'une de ses faces, et associée à chaque orifice 5 au moins une rainure radiale 22 servant à canaliser vers l'extérieur d'éventuelles fuites de gaz.

Comme il ressort de ce qui précède, l'invention apporte une grande amélioration à la technique existante en fournissant un joint de conception simple, assurant les différentes fonctions d'étanchéité et de butée de serrage, tout en étant extrêmement stable, et en ne nécessitant pas d'opérations de resserrage du joint au cours de la durée de vie du moteur.

## Revendications

1. Joint de culasse pour moteur à combustion interne du type comprenant une plaque réalisée en un matériau rigide dans laquelle sont ménagés des orifices (4, 5) pour les passages d'huile de lubrification, de liquide de refroidissement de la culasse, des goujons de serrage sur le Bloc moteur, et pour les chambres de combustion, chaque orifice (4) pour le passage d'un liquide étant équipé d'un cordon d'étanchéité souple (7, 8) et chaque orifice (5) de passage de gaz étant équipé d'un anneau métallique (12, 15), caractérisé en ce que la plaque (1) est réalisée en une matière organique rigide ne fluant pas à chaud, formant à la fois l'âme du joint et les butées de serrage de celui-ci.

2. Joint de culasse selon la revendication 1, caractérisé en ce qu'il est réalisé en une résine thermostable rigide, de type thermoplastique à faible taux de fluage, telle que du polysulfure de phénylène.

3. Joint de culasse selon l'une quelconque des revendications 1 et 2, caractérisé en ce qu'il est réalisé en une résine thermostable rigide de type thermodurcissable.

4. Joint de culasse selon l'une quelconque des revendications 2 et 3, caractérisé en ce que la résine le constituant est chargée de fibres.

5. Joint de culasse selon l'une quelconque des revendications 1 à 4, caractérisé en ce que la plaque (1) le constituant est pleine et d'épaisseur constante.

6. Joint de culasse selon l'une quelconque des revendications 1 à 4, caractérisé en ce que la plaque (1) le constituant possède un épaisseur variable, plus importante (3) autour des orifices (4) à étancher et des passages de vis que dans les zones de liaison (2).

7. Joint de culasse selon l'une quelconque des revendications 1 à 4, caractérisé en ce que la plaque le constituant comprend un réseau de segments reliant entre elles les zones épaisses situées autour des orifices à étancher.

8. Joint de culasse selon l'une quelconque des revendications 1 à 7, caractérisé en ce que la plaque (1) le constituant présente, dans l'une de ses faces, au moins une rainure (22) s'étendant radialement depuis chaque orifice de passage des gaz jusqu'au bord de la plaque.

9. Joint de culasse selon l'une quelconque des revendications 1 à 8, caractérisé en ce que le cordon d'étanchéité (8) associé à chaque orifice (4) de passage de liquide est monté sur la tranche de celui-ci.

10. Joint de culasse selon l'une quelconque des revendication 1 à 8, caractérisé en ce que le cordon d'étanchéite (7) associé à chaque orifice de passage (4) de liquide est déposé dans une rainure annulaire (6) entourant celui-ci.

11. Joint de culasse selon l'une quelconque des revendications 1 à 10, caractérisé en ce que l'anneau métallique (12) associé à chaque orifice (5) de passage de gaz est nervuré et fixé sur la tranche de celui-ci, où il est encastré ou non.

12. Joint de culasse selon l'une quelconque des revendications 1 à 10, caractérisé en ce que l'anneau métallique (15) associé à chaque orifice (5) de passage de gaz, est constitué par un jonc torique élastique (16) emprisonné dans une sertissure métallique (15).

13. Joint de culasse selon l'une quelconque des revendications 1 à 10, caractérisé en ce que l'anneau métallique, associé à chaque orifice de passage de gaz, est constitué par une sertissure métallique (19), la plaque comportant, dans la zone de sertissage, des rainures annulaires (20).

14. Joint de culasse selon l'une quelconque des revendications 1 à 13, caractérisé en ce que la plaque le constituant est obtenue par une technique de moulage par injection.

15. Joint de culasse selon l'une quelconque des revendications 1 à 13, caractérisé en ce que la plaque le constituant est obtenue par une technique de moulage par compression.

16. Joint de culasse selon l'une quelconque des revendications 1 à 13, caractérisé en ce que la plaque le constituant est obtenue par une technique de moulage par transfert.

**Patentansprüche**

1. Zylinderkopfdichtung für Brennkraftmaschine, des Typs beinhaltend eine aus einem starren Material gebildete Platte, in der Öffnungen (4, 5) für die Durchlässe von Schmieröl, von Kühlflüssigkeit für den Zylinderkopf und von Klemmbolzen auf dem Motorblock, und für die Brennkammern, vorgesehen sind, wobei jede Öffnung (4) für den Durchlaß einer Flüssigkeit mit einer weichelastischen Dichtungslitze (7, 8) und jede Öffnung (5) für den Gasdurchlaß mit einem metallischen Ring (12, 15) versehen ist, dadurch gekennzeichnet, daß die Platte (1) aus einem organischen, starren, nicht warmfließenden Material hergestellt ist und die Seele der Dichtung und deren Klemmanschläge bildet.

2. Zylinderkopfdichtung nach Anspruch 1, dadurch gekennzeichnet, daß sie aus einem starren, thermostabilen Harz des Typs Thermoplast mit geringem Fließwert, wie Polysulfid von Phenylen, hergestellt ist.

3. Zylinderkopfdichtung nach einem der Ansprüche 1 und 2, dadurch gekennzeichnet, daß sie aus einem starren thermostabilen Harz des warmhärtbaren Typs hergestellt ist.

4. Zylinderkopfdichtung nach einem der Ansprüche 2 und 3, dadurch gekennzeichnet, daß das sie bildende Harz mit Fasern gefüllt ist.

5. Zylinderkopfdichtung nach einem der Ansprüche 1—4, dadurch gekennzeichnet, daß die sie bildende Platte (1) vollwandig und von konstanter Dicke ist.

6. Zylinderkopfdichtung nach einem der Ansprüche 1—4, dadurch gekennzeichnet, daß die sie bildende Platte (1) eine variable Dicke besitzt, und zwar dicker (3) um die abzudichtenden Öffnungen (4) und die Schraubendurchlässe herum, als in den Verbindungszonen (2).

7. Zylinderkopfdichtung nach einem der Ansprüche 1—4, dadurch gekennzeichnet, daß die sie bildende Platte ein Netz von Segmenten aufweist, die unter sich die dicken, um die abzudichtenden Öffnungen herumliegenden Zonen verbinden.

8. Zylinderkopfdichtung nach einem der Ansprüche 1—7, dadurch gekennzeichnet, daß die sie bildende Platte (1) in einer ihrer Flächen mindestens eine Nut (22) aufweist, die sich radial von jeder Gasdurchlaßöffnung bis zum Rand der Platte erstreckt.

9. Zylinderkopfdichtung nach einem der Ansprüche 1—8, dadurch gekennzeichnet, daß die einer jeden Flüssigkeitsdurchlaßöffnung (4) zugeordnete Abdichtungslitze (8) auf deren Rand angeordnet ist.

10. Zylinderkopfdichtung nach einem der Ansprüche 1—8, dadurch gekennzeichnet, daß die einer jeden Flüssigkeitsdurchlaßöffnung (4) zugeordnete Abdichtlitze (7) in einer sie umgebenden ringförmigen Nut (6) niedergelegt ist.

11. Zylinderkopfdichtung nach einem der Ansprüche 1—10, dadurch gekennzeichnet, daß der einer jeden Gasdurchlaßöffnung (5) zugeordnete metallische Ring (12) gerippt und auf deren Rand befestigt ist, wo er eingefalzt ist oder nicht.

12. Zylinderkopfdichtung nach einem der Ansprüche 1—10, dadurch gekennzeichnet, daß der jeder Gasdurchlaßöffnung (5) zugeordnete metallische Ring (15) aus einer elastischen Ringdichtung (16) gebildet ist, die im Inneren einer metallischen Fassung (15) angeordnet ist.

13. Zylinderkopfdichtung nach einem der Ansprüche 1—10, dadurch gekennzeichnet, daß der jeder Gasdurchlaßöffnung zugeordnete metallische Ring durch eine metallische Fassung (19) gebildet ist, wobei die Platte in der Fassungszone ringförmige Nuten (20) aufweist.

14. Zylinderkopfdichtung nach einem der Ansprüche 1—13, dadurch gekennzeichnet, daß die sie bildende Platte durch Spritzgießen hergestellt ist.

15. Zylinderkopfdichtung nach einem der Ansprüche 1—13, dadurch gekennzeichnet, daß die sie bildende Platte durch Druckgießen hergestellt ist.

16. Zylinderkopfdichtung nach einem der Ansprüche 1—13, dadurch gekennzeichnet, daß die sie bildende Platte durch Transferpressen hergestellt ist.

## Claims

1. A cylinder head gasket for an internal combustion engine of the type comprising a plate made of a rigid material in which openings (4, 5) are provided for the passage of lubricating oil, cooling liquid for the cylinder head, locking studs onto the engine block, and for the combustion chambers, each opening (4) for the passage of a liquid being equipped with a flexible sealing rim (7, 8) and each opening (5) for the passage of gas being equipped with a metal ring (12, 15), characterized in that the plate (1) is made of a rigid organic material which is not hot-flowing, and which forms both the core of the gasket and the locking stops thereof.

2. A cylinder head gasket according to claim 1, characterized in that it is made of a rigid thermostable resin of the thermoplastic type having a low flow rate, such as phenylene polysulphide.

3. A cylinder head gasket according to any one of claims 1 and 2, characterized in that it is made of a rigid thermostable resin of the thermosetting type.

4. A cylinder head gasket according to any one of claims 2 and 3, characterized in that the resin forming the said gasket is filled with fibres.

5. A cylinder head gasket according to any one of claims 1 to 4, characterized in that the plate (1) forming the said gasket is solid and has a constant thickness.

6. A cylinder head gasket according to any one of claims 1 to 4, characterized in that the plate (1) forming the said gasket has a variable thickness, greater (3) around the openings (4) to be sealed and the screw passages than in the connection areas (2).

7. A cylinder head gasket according to any one of claims 1 to 4, characterized in that the plate forming the said gasket comprises a network of segments connecting the thick areas around the openings to be sealed.

8. A cylinder head gasket according to any one of claims 1 to 7, characterized in that the plate (1) forming the said gasket has, in one of its faces, at least one groove (22) extending radially from each gas passage opening to the edge of the plate.

9. A cylinder head gasket according to any one of claims 1 to 8, characterized in that the sealing rim (8) associated with each opening (4) for the passage of liquid is mounted on the edge thereof.

10. A cylinder head gasket according to any one of claims 1 to 8, characterized in that the sealing rim (7) associated with each opening (4) for the passage of liquid is disposed in an annular groove (6) surrounding the latter.

11. A cylinder head gasket according to any one of claims 1 to 10, characterized in that the metal ring (12) associated with each opening (5) for the passage of gas is ribbed and fixed on the edge thereof, where it may or may not be embedded.

12. A cylinder head gasket according to any one of claims 1 to 10, characterized in that the metal ring (15) associated with each opening (5) for the passage of gas is formed by a resilient toric retainer ring (16) surrounded by a metal mounting (15).

13. A cylinder head gasket according to any one of claims 1 to 10, characterized in that the metal ring, associated with each opening for the passage of gas, is formed by a metal mounting (19), the plate comprising annular grooves (20) in the locking area.

14. A cylinder head gasket according to any one of claims 1 to 13, characterized in that the plate forming the said gasket is obtained by an injection moulding technique.

15. A cylinder head gasket according to any one of claims 1 to 13, characterized in that the plate forming the said gasket is obtained by a compression moulding technique.

16. A cylinder head gasket according to any one of claims 1 to 13, characterized in that the plate forming the said gasket is obtained by a transfer moulding technique.

FIG.1

FIG.2

FIG.3

FIG.4

FIG.5

FIG.6

FIG.7

FIG.8

FIG.9

FIG.10

FIG.11